# EUROPEAN PATENT SPECIFICATION

(11) **EP 0 382 815 B1**
(45) Date of publication and mention of the grant of the patent: **06.10.1993**
(21) Application number: 89907810.9
(22) Date of filing: 03.07.1989
(51) Int. Cl.: A01K 61/00

(54) **METHOD AND APPARATUS FOR BREEDING ROES OR EGGS OF AQUATIC ANIMALS**
VERFAHREN UND VORRICHTUNG ZUM AUSBRÜTEN VON ROGEN ODER EIERN VON IM WASSER LEBENDEN TIEREN
PROCEDE ET APPAREIL D'ELEVAGE D'OEUFS D'ANIMAUX AQUATIQUES

(30) Priority: 01.07.1988 HU 345288
(43) Date of publication of application: 22.08.1990
(73) Proprietor: LASZLO, Lajos, H-1163 Budapest (HU); BERCSENYI, Miklos, H-1183 Budapest (HU); NAGY, Andras, H-1025 Budapest (HU)
(72) Inventor: LASZLO, Lajos, H-1163 Budapest (HU); BERCSENYI, Miklos, H-1183 Budapest (HU); NAGY, Andras, H-1025 Budapest (HU)
(74) Representative: Viering, Jentschura & Partner
(86) International application number: PCT/HU89/00034
(87) International publication number: WO 90/00004

(56) References cited:
- DE-C- 909 514
- US-A- 4 014 293
- Soviet Inventions Illustrated, section P, week J50, 02 February 1983, (02.02.83), Derwent Publications Ltd., London, P14, see SU 902 691 (POND FISCHERY RESIN)
- Soviet Inventions Illustrated, sectio P, week 8812, 04 May 1988 (04.05.88), Derwent Publications Ltd., London, P14, see SU 1331 466 (N-W REGION BALTIKA)

## Description

### Field of the Invention

This invention relates to a method for breeding fertilized roes or eggs of aquatic animals wherein artificial living-space is provided for them and the roes or eggs are hatched in the artificial living space. The invention also relates to an apparatus for breeding roes or eggs of aquatic animals having a container for providing an artificial living-space for the roes or eggs.

### Background of the Invention

In the conventional large scale systems of propagation of aquatic animals, their roes or eggs are separated and special living-spaces are provided for them. In all cases, the gas exchange being necessary for the evolution or development of the roes or eggs is provided from the water which has to be streamed through the living-space constantly in a great amount.

However, the conventional methods and apparatuses for artificial breeding of the roes or eggs have numerous problems. As it is known, the normal development of the roes or eggs necessitates specially treated water which has to be streamed in great amount for providing the intensive gas exchange as required by the roes or eggs. This has its reason in the fact that not only the embryo growing in the roes or eggs has to be fed with oxygen but the carbon dioxide produced by them and the toxic nitrogen compounds resulting from the autolysis of the died embryos have to be removed from the water.

For reducing the water consumption, it has been suggested earlier to regenerate and recycle the water coming out of the living-space of the known solutions. It has been proven, however, that this don't make easier and cheaper the artificial breeding of roes or eggs since, for recycling, clearing and regeneration, at least so many machines, materials and energy are needed as for clearing and treating the newly introduced fresh water. Nevertheless, the conventional solution occupies a relatively big surface area and it can only be erected in the neighborhood of an adapted water source and energy source.

All these factors mean a considerable hindrance in the way of the breeding of roes or eggs under industrial circumstances. Therefore, the breeding of roes or eggs is not solved until yet in the quality and amount as required in today's agriculture.

### Essence of the Invention

The main object of this invention is to eliminate the above said deficiencies and to provide a method and an apparatus for breeding roes or eggs of aquatic animals wherein optimal circumstances can be provided for their evolution and, thus, they can be rescued to a greater extent as before for further raising. Another object of the invention is to provide a safe, reliable and automatic function also with regard to the special sensitiveness of the roes or eggs. Further to this, the construction should be simple and easy to operate.

According to the improvement of the known method in this invention, during the hatching, the roes or eggs are held and incubated at least part of the incubation time in gaseous environment and a gas exchange between the roes or eggs and the gaseous environment is provided and the gaseous environment is humidified for avoiding desiccation of the roes or eggs.

According to a preferred realization of the method in this invention, the incubation is realized in a space being in controlled connection with surroundings of the living-space and the living-space is heat isolated and semi-hermetically closed against the surroundings.

According to a further preferred realization, during the incubation, at least periodically, constant temperature is provided and the gaseous environment has a relative moisture content of 100 percent.

In this case, it is also possible to provide an at least noncontinuous gas exchange between the gaseous environment of the incubation and the surroundings.

According to a further preferred realization of the method in this invention, during the incubation, the hatched larvae are separated and then washed into a liquid medium for their further raising.

According to the improvement of the apparatus in this invention, the artificial living-space for hatching the roes or eggs is provided in a heat-isolated and semi-hermetically closed thermostat chamber providing a gaseous incubation environment within the container with regulated temperature and moisture content.

In a preferred embodiment of the apparatus in this invention, at least one means holding the roes or eggs and, under each holding means, a vessel containing a liquid medium are arranged within the thermostat chamber. Therein, each means holding the roes or eggs can be attached to a moving device immersing the holding means into and lifting them out of the liquid medium contained in the vessel within the thermostat chamber.

A quite simple embodiment is provided when the means holding the roes or eggs is formed as a net, and measurements of meshes of the net are smaller than the measurements of the roes or eggs but greater than that of the living larvae.

The embodiment of the invention is also preferred, wherein a ventilation device, a heat exchanger device and, preferably, a humidifier are arranged.

It is also preferred according to the invention, when a basin containing a treated liquid for post-hatching of the larvae and being separated from the thermostat chamber is provided.

It is finally preferred, when an electronic circuitry controlling processes of the incubation of the roes or eggs is provided.

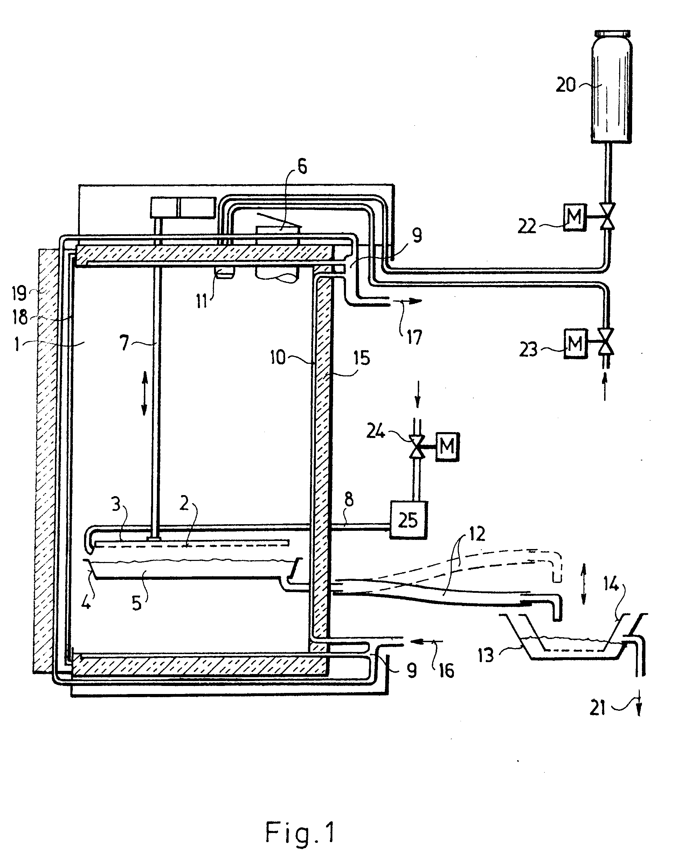

### Brief Description of the Drawing

Further objects and details of the invention will be described hereinafter on the basis of preferred examples with reference to the accompanying drawing, in which:

The single figure shows diagrammatically a preferred embodiment of the apparatus of this invention.

### Detailed Description of the Preferred Embodiment

In the sense of the invention, the development in this invention is based on the idea that the oxygen amount being necessary to pre-hatch and hatch the roes or eggs of aquatic animals can be provided not only from the great amount of specially treated water as in the conventional solutions but from a gaseous environment, too. Thus, in this invention, the oxygen being necessary for the development and the life of the roes or eggs is gained from gaseous incubation environment and not from the specially treated water held in constant streaming around them as in the known solutions. In this case, the oxygen exchange is carried out by direct diffusion into and out of the gaseous environment.

The roes or eggs are pre-hatched and hatched in the same equipment: in a thermostat chamber 1. Therein, the roes or eggs are arranged on means for holding the roes or eggs during the period of hatching. Under each holding means, a vessel 4 is arranged which contains a liquid medium 5. The holding means can be immersed into and lifted out of vessel 4 with the aid of a moving device 7. For providing a very compact embodiment of the apparatus, the holding means can be formed as rods or plates arranged vertically within thermostat chamber 1 and the roes or eggs can be "glued" onto the rods or plates.

In the embodiment as shown in the figure, the means for holding the roes or eggs is formed as a net 2 being stretched onto a frame 3. Net 2 is made of an artificial material and its meshes are smaller than the measurements of the roes or eggs but greater than that of the living larvae. Vessel 4 arranged under net 2 has here a tray form and contains liquid medium 5 being necessary for the hatching period. As it is clear from the figure, more than one net 2 and vessel 4 can be arranged one below and beside the other.

Moving device 7 is attached to net 2 by its frame 3. In the figure, only one of them is shown for the sake of simplicity and moving device 7 is shown only schematically. All conventional solutions can find application here providing a relatively short vertical displacement of frames of net 2. This can be, e. g., an endless chain guided by pulleys round and round and frames 3 of nets 2 can be connected to members of the chain.

As it will be described below in more detail, in the inside of thermostat chamber 1, a well defined artificial incubation climate is to be produced and maintained. The temperature being necessary for this can be provided by Peltier elements arranged on the walls of thermostat chamber 1. As is known, these semiconductor elements change their temperature in response to the electric current led through them. Thus, the heating or cooling of the inside of thermostat chamber 1 can be well controlled in an electric way. The Peltier elements can be connected to a control circuitry of the apparatus and be remote controlled. With this, a controlled relation can be provided between the heat insulated and semi-hermetically closed incubation space of thermostat chamber 1 and its surrounding.

The figure illustrates another solution for providing the inner climate. Insides of a heat insulation 15 of thermostat chamber 1, a surface radiator 10 is arranged, within which a liquid, preferably water with pre-determined temperature is circulated through inlet and outlet stubs 9. The water having the required temperature is produced in a programmable heater-cooler and is forwarded into surface radiator 10 in the direction of an arrow 16. The water leaves surface radiator 10 in the direction of an arrow 17 and gets back into programmable heater-cooler.

The gaseous medium of the incubation space within the thermostat chamber 1, according to its semi-hermetical character, is to be refreshed at least periodically and, at the same time, it has to be humidified for avoiding the desiccation of the roes or eggs and providing a moisture content near to 100 percent. For this, in the shown example, through remote controlled valves 23 pressurized air and through remote controlled valves 22 liquid are forwarded to mixing nozzles 11 arranged within thermostat chamber 1. These mixing nozzles 11can be distributed in suitable places within thermostat chamber 1 for providing an intensive air exchange and moistening of the gaseous medium.

Of course, valves 22 and 23 can independently be controlled for the proper adjustment of the relation of the amounts of air and moisture, respectively. At the same time, other treating substances such as antibiotics can be forwarded into the incubation space out of container 20 connected before valve 22. The gaseous medium leaves thermostat chamber 1 through a ventilation opening 6.

Liquid medium 5 is forwarded into vessels 4 arranged under nets 2 through filling pipes 8. These pipes 8 are connected to a distributor 25, whereto the liquid is led after suitable treatment and preparation through a controlled valve 24. On the other hand, liquid medium 5 leaves vessels 4 and thermostat chamber 1 through an outlet pipe 12 and gets into a basin 13 being separated from thermostat chamber 1. In the inside of basin 13, a collector 14 is arranged with which the larvae can be lifted out of and removed from basin 13. Sewage leaves basin 13 in direction of an arrow 21.

In the figure, it is also apparent that thermostat chamber 1 is closed by a glass door 18 on the outside of which a heat-isolated door 19 is arranged.

The devices within thermostat chamber 1 as well as those attached to thermostat chamber 1 are operated and controlled by an electronic control circuitry which can be formed in simplest and most convenient manner as a microprocessor. Input data for the circuitry are the signals coming from the feelers or from the operating organs through which starting parameters can be given in and the operation of the apparatus can be influenced. Output data are the control signals as well as those to be displayed.

A preferred realization of the method in this invention will be described in connection with the operation of the preferred embodiment of the apparatus as shown in the figure.

The fertilized roes or eggs are first swollen out and made free of stickiness as usual. Thereafter, the roes or eggs are placed on nets 2 stretched onto frames 3 and nets 2 are arranged in thermostat chamber 1 through doors 19 and 18 by connecting frames 3 of nets 2 to moving device 7. After closing doors 18 and 19, the heat isolated and semi-hermetic incubation space being in controlled relation to the surrounding is formed.

In the first phase, the living space necessitated by the prehatching of the roes or eggs is provided in the incubation environment. For this, in the shown example, water with suitable temperature is circulated within surface radiator 10 and the relative moisture content of the gaseous medium is raised to 100 percent with the help of mixing nozzles 11. Firstly, antibiotics from container 20 are sprayed through mixing nozzles 11 onto the roes or eggs arranged on nets 2. The air within the incubation area is periodically exchanged by opening valve 23 and blowing pressurized air into thermostat chamber 1 through mixing nozzles 11. Overflow leaves the incubation space through ventilation opening 6.

During the second hatching period after pre-hatching of the roes or eggs, the temperature of the incubation environment is to be increased. For this, electronic circuitry gives command to increase the inner temperature of thermostat chamber 1 which is controlled by suitable feelers. From the programmable heater-cooler, warmer water is fed into surface radiator 10. At the same time, liquid medium 5 having the desired temperature streams after valve 24 being opened through dividers 25 and filling pipes 8 onto vessels 4 arranged under nets 2, respectively. During this, outlet pipe 12 is in its higher position as shown by dashed lines and thus, liquid medium 5 can not flow out of vessels 4. In reaction, the hatch-out and the production of the enzyme solving the shield of the roes or eggs will start. Thereafter, the larvae get hatched in a chain reaction. The hatched larvae get through the meshes of net 2 and fall into liquid medium 5 contained in vessel 4. At the same time, thanks to the measurements of meshes of net 2, the roes or eggs being not hatched as well as other wastes such as the shields of the larvae are retained on net 2.

The hatching process can be accelerated and washing out of hatched larvae can be promoted by immersing nets 2 by their frames 3 with the help of moving device 7 into and lifting them out of liquid medium 5 several times. Operation of moving device 7 is also governed by the control circuitry. With this, the hatched larvae are washed into liquid medium 5.

The larvae gathered in liquid medium of vessel 4 are forwarded out of thermostat chamber 1 through outlet pipe 12 being in the position shown by full lines in the figure into basin 13, better said into collector 14 by liquid medium 5 streaming out of vessel 4. In basin 13, water having the quality required by the young larvae is provided. By lifting collector 14 out of basin 13, the larvae can be transported to any desired place.

As it is proven by the experiments, surprisingly high percent of the roes or eggs gets hatched and nearly all of the liveable larvae survive the tribulations of the incubation, the breeding and pre-raising. This is true despite the fact that not the specially treated water of great amount is needed in this invention, but the prehatching is carried out without any water and for the hatching, extremely small amount of liquid medium 5 is used only. The larvae pre-raised in basin 13 is relative liveable, thus, they need relatively small amount of water.

As a matter of course, the simplest realization under laboratory circumstances is only described in the above specification. When the idea of the invention is to be realized in manufacturing or industrial sizes, the machinery necessitated by this can find utilization, however, the features described in the main claims have to be taken into consideration.

## Claims

1. A method for breeding roes or eggs of aquatic animals wherein artificial living-space is provided for them and the roes or eggs are hatched in the artificial living-space, characterized in that during hatching, the roes or eggs are incubated and held at least part of the incubation time in gaseous environment and a gas exchange between the roes or eggs and the gaseous environment is provided and the gaseous environment is humidified for avoiding desiccation of the roes or eggs.

2. A method as claimed in Claim 1, wherein the incubation is realized in a space being in controlled connection with surroundings of the living-space and the living-space is heat isolated and semi-hermetically closed against the surroundings.

3. A method as claimed in Claim 1 or 2, wherein during the incubation, at least periodically, constant temperature is provided and the gaseous environment has a relative moisture content of 100 percent.

4. A method as claimed in any one of Claims 1 to 3, wherein an at least noncontinuous gas exchange is provided between the gaseous environment of the incubation and the surroundings.

5. A method as claimed in any one of Claims 1 to 4, wherein during the incubation, the hatched larvae are separated and then washed into a liquid-medium for their further raising.

6. An apparatus for breeding roes or eggs of aquatic animals having a container for providing artificial living-space for the roes or eggs, characterized in that in the container the artificial living-space for hatching the roes or eggs is provided in a heat-isolated and semi-hermetically closed thermostat chamber (1) providing a gaseous incubation environment with regulated temperature and moisture content.

7. An apparatus as claimed in Claim 6, wherein at least one means holding the roes or eggs and, under each holding means, a vessel (4) containing a liquid medium (5) are arranged within the thermostat chamber (1).

8. An apparatus as claimed in Claim 7, wherein each means holding the roes or eggs is attached to a moving device (7) immersing the holding means into and lifting them out of the liquid medium (5) contained in the vessel (4) within the thermostat chamber (1).

9. An apparatus as claimed in Claim 8, wherein the means holding the roes or eggs is formed as a net (2), and the measurements of the meshes of the net (2) are smaller than the measurements of the roes or eggs but greater than that of the living larvae.

10. An apparatus as claimed in any one of Claims 6 to 9, wherein a ventilation device, a heat exchanger device and, preferably, a humidifier (11) are arranged.

11. An apparatus as claimed in any one of Claims 6 to 10, wherein a basin (21) containing a treated liquid for post-hatching of the larvae and being separated from the thermostat chamber (1) is provided.

12. An apparatus as claimed in any of claims 6 to 11, wherein an electronic circuitry controlling processes of the incubation of the roes or eggs is provided.

## Patentansprüche

1. Verfahren zum Brüten von Rogen oder Eiern von Wassertieren, wobei für den Rogen oder die Eier ein künstlicher Lebensraum vorgesehen ist und der Rogen oder die Eier in dem künstlichen Lebensraum gebrütet werden, dadurch gekennzeichnet, daß während des Brutvorgangs der Rogen oder die Eier zumindest über einen Teil der Brutzeit in einer gasförmigen Umgebung gehalten und ausgebrütet werden und für einen Gasaustausch zwischen dem Rogen oder den Eiern und der gasförmigen Umgebung gesorgt wird und die gasförmige Umgebung angefeuchtet wird, um eine Austrocknen des Rogens oder der Eier zu verhindern.

2. Verfahren nach Anspruch 1, wobei der Brutvorgang in einem Raum stattfindet, welcher unter Berücksichtigung der Umwelt des Lebensraums geregelt wird und wobei der Lebensraum gegen die Umwelt wärmeisoliert ist und halbhermetisch abgeschlossen ist.

3. Verfahren nach Anspruch 1 oder 2, wobei während des Brutvorgangs zumindest über gewisse Zeitperioden eine konstante Temperatur gehalten wird und die gasförmige Umgebung einen relativen Feuchtigkeitsgehalt von 100% aufweist.

4. Verfahren nach einem der Ansprüche 1 bis 3, wobei zumindest ein nicht kontinuierlicher Gasaustausch zwischen der gasförmigen Umgebung für den Brutvorgang und der Umwelt stattfindet.

5. Verfahren nach einem der Ansprüche 1 bis 4, wobei während des Brutvorgangs die ausgebrüteten Larven ausgesondert werden und dann in ein flüssiges Medium zwecks deren weiteren Aufzucht eingebracht werden.

6. Vorrichtung zum Brüten von Rogen oder Eiern von Wassertieren mit einem Behälter zum Bereitstellen eines künstlichen Lebensraums für den Rogen oder die Eier, dadurch gekennzeichnet, daß in dem Behälter der künstliche Lebensraum zum Brüten des Rogens oder der Eier mit einer wärmeisolierten und halbhermetisch abgeschlossenen Thermostatkammer (1) versehen ist, welche eine gasförmige Brutvorgang-Umgebung mit einer regulierten Temperatur und einem regulierten Feuchtigkeitsgehalt bereitstellt.

7. Vorrichtung nach Anspruch 6, wobei mindestens eine Halteeinrichtung zum Halten des Rogens oder der Eier in der Thermostatkammer (1) angeordnet ist und unter jeder der Halteeinrichtungen ein Behälter (4), welcher ein flüssiges Medium (5) enthält, in der Thermostatkammer (1) angeordnet ist.

8. Vorrichtung nach Anspruch 7, wobei jede Halteeinrichtung zum Halten des Rogens oder der Eier an einer Manipuliereinrichtung (7) angebracht ist, mittels welcher die Halteeinrichtung in das flüssige Medium (5) eingetaucht werden kann oder aus dem flüssigen Medium herausgehoben werden kann, welches in dem Behälter (4) innerhalb der Thermostatkammer (1) enthalten ist.

9. Vorrichtung nach Anspruch 8, wobei die Halteeinrichtung zum Halten des Rogens oder der Eier als Netz (2) ausgebildet ist und die Maschenweite des Netzes (2) kleiner als die Abmessungen des Rogens oder der Eier, aber größer als die Abmessungen der lebenden Larve ist.

10. Vorrichtung nach einem der Ansprüche 6 bis 9, wobei eine Ventilationsvorrichtung, eine Wärmetauschervorrichtung und vorzugsweise eine Befeuchtungseinrichtung (11) vorgesehen sind.

11. Vorrichtung nach einem der Ansprüche 6 bis 10, wobei ein Becken (21), welches eine präparierte Flüssigkeit für das Nachbrüten der Larven enthält, vorgesehen ist, wobei dieses Becken außerhalb der Thermostatkammer (1) angeordnet ist.

12. Vorrichtung nach einem der Ansprüche 6 bis 11, wobei ein elektronischer Regelungsschaltkreis vorgesehen ist, welcher den Brutvorgang des Rogens oder der Eier regelt.

## Revendications

1. Procédé d'élevage des oeufs de poissons ou d'animaux aquatiques dans lequel est prévu pour ceux-ci un volume artificiel de logement et dans lequel les oeufs sont mis à incuber dans ce volume de logement artificiel*, **caractérisé en ce que*** pendant l'incubation, les oeufs sont incubés et maintenus pendant au moins une partie du temps d'incubation dans un environnement gazeux et en ce qu'un échange gazeux est assuré entre les oeufs et l'environnement gazeux, et en ce que l'environnement gazeux est humidifié pour éviter la dessication des oeufs.

2. Procédé selon la Revendication 1, dans lequel l'incubation est réalisée dans un volume en relation contrôlée avec les abords du volume de logement, le volume de logement étant isolé thermiquement et fermé semi-hermétiquement vis-à-vis desdits abords.

3. Procédé selon la Revendication 1 ou 2, dans lequel pendant l'incubation, au moins périodiquement, est assurée une température constante et l'environnement gazeux présente un degré hygrométrique relatif d'au moins 100 %.

4. Procédé selon l'une quelconque des Revendications 1 à 3, dans lequel un échange gazeux au moins non continu est assuré entre l'environnement gazeux de l'incubation et les abords.

5. Procédé selon l'une quelconque des Revendications 1 à 4, dans lequel pendant l'incubation les larves incubées sont séparées puis lavées dans un milieu liquide en vue de leur élevage ultérieur.

6. Dispositif pour l'élevage des oeufs de poissons ou d'animaux aquatiques ayant un récipient offrant un volume artificiel de logement pour les oeufs, ***caractérisé en ce que,*** dans le récipient, le volume artificiel de logement pour l'incubation des oeufs est prévu dans une chambre (1) thermostatée isolée thermiquement et semi-close, assurant un environnement gazeux pour l'incubation avec une température et un degré hygrométrique régulés.

7. Dispositif selon la Revendication 6, dans lequel au moins un moyen de maintien des oeufs et, sous chaque moyen de maintien, une cuve (4) contenant un milieu liquide (5) sont disposés dans la chambre thermostatée (1).

8. Dispositif selon la Revendication 7, dans lequel chacun des moyens de maintien des oeufs est attaché à un dispositif mobile (7) immergeant les moyens de maintien dans le milieu liquide (5) contenu dans la cuve (4) à l'intérieur de la chambre thermostatée (1) et les en ressortant.

9. Dispositif selon la Revendication 8, dans lequel les moyens de maintien des oeufs adoptent la forme d'un filet (2) et les dimensions des mailles du filet (2) sont inférieures aux dimensions des oeufs mais supérieures à celles des larves.

10. Dispositif selon l'une quelconque des Revendications 6 à 9, comprenant un dispositif de ventilation, un dispositif échangeur de chaleur et, de manière préférée, un humidificateur (11).

11. Dispositif selon lune quelconque des Revendications 6 à 10, comprenant un réservoir (21) contenant un liquide traité pour la post-incubation des larves et séparé de la chambre thermostatée (1).

12. Dispositif selon l'une quelconque des Revendications 6 à 11, comprenant un circuit électronique contrôlant les processus d'incubation des oeufs.
